# EUROPEAN PATENT APPLICATION

(11) **EP 4 509 868 A1**
(43) Date of publication of application: **19.02.2025**
(21) Application number: 23191892.1
(22) Date of filing: 17.08.2023
(51) Int. Cl.: G01S 7/41, G06N 3/045, H04W 4/38

(54) **METHOD FOR PROVIDING AT LEAST ONE SENSING-RELATED SERVICE AND/OR FOR GENERATING TRAINING AND/OR SENSING MODEL DATA BY MEANS OF PROCESSING SENSING-RELATED DATA THAT IS GENERATED WITHIN OR AS PART OF A MOBILE COMMUNICATION NETWORK, SYSTEM OF MOBILE COMMUNICATION NETWORK, PROGRAM AND COMPUTER-READABLE MEDIUM**

(71) Applicant: Deutsche Telekom AG, 53113 Bonn (DE)
(72) Inventor: KADELKA, Arndt, 50933 Cologne (DE)
(74) Representative: Schwöbel, Thilo K.

(57) **Abstract**

The invention relates to a method for providing at least one sensing-related service and/or for generating training and/or sensing model data by means of processing sensing-related data that is generated within or as part of a mobile communication network,
wherein the mobile communication network comprises at least a first sensing-capable or sensing-enabled entity or functionality and a second sensing-capable or sensing-enabled entity or functionality,
wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data,
wherein, in order to provide at least one sensing-related service and/or in order to generate training and/or sensing model data, the method comprises the following steps:
-- in a first step, unsupervised pre-training is performed on either the first sensing-capable or sensing-enabled entity or functionality or on the second sensing-capable or sensing-enabled entity or functionality or on both,
-- in a second step, a sensing model is selected in dependence on a predefined sensing use case,
-- in a third step, a fine-tuning of the sensing model and/or a fine-tuning of the generation of the training and/or sensing model data is performed.

## Description

### BACKGROUND

The present invention relates a method for providing at least one sensing-related service and/or for generating training and/or sensing model data by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data.

Furthermore, the present invention relates to a system or to a mobile communication network for providing at least one sensing-related service and/or for generating training and/or sensing model data by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data.

Furthermore, the present invention relates to a program and to a computer-readable medium for providing at least one sensing-related service and/or for generating training and/or sensing model data according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

Wireless sensing technologies have originated from the most widely used sensing technology known as radar (radio detection and ranging), where radio waves are exploited to determine distance, angle, or instantaneous velocity of objects. Nowadays, this principle is exploited for example by radar or lidar (light detection and ranging) systems that are capable of obtaining an image of the environment around a sensor. A radar or lidar system may be either a stand-alone device or integrated in a mobile device or a vehicle.

By means of realizing sensing capabilities in or as part of mobile communication networks, primarily by means of one or a plurality of sensing-capable or sensing-enabled entities or functionalities that are generating and transmitting radiofrequency sensing signals, it is possible to obtain information regarding either transmission channel properties between different stations, especially base station entities or user equipments, and/or regarding objects from where such radiofrequency sensing signals are reflected.

Even though such sensing capabilities are able to procure further information regarding transmission channels and/or objects, especially moving objects, nearby or in the vicinity of the respective sensing-capable or sensing-enabled entities or functionalities, mobile radio technologies (mobile radio access technologies) and radar have developed over decades more or less independently. However, lately the convergence of both technologies is increasing: Future advances in mobile communications (5G Advanced and 6G) anticipate that advanced radio sensing functions will become important services of mobile broadband (radio) networks. Joint communication and sensing (JCaS) and/or integrated communication and sensing (ICaS) will address a combined radio interface serving both, communication and sensing. Sensing in 6G is considered in an even broader range, especially referring to the ability of devices (e.g. base station entities or user equipments) to detect and gather information about the environment around them. This could include using advanced sensor technologies to gather information about the physical world, or using machine learning or artificial intelligence algorithms to analyze data from one or multiple sensors in real-time. Furthermore, for 6G, integrated communication and sensing (ICaS) is considered that improves the ICaS concept by providing common waveforms and other radio functions. An initial step for the introduction of sensing is currently under preparation for 3GPP Rel-19, providing sensing functionalities on top of 5G radio for identified use cases.

Typically, wireless sensing technologies are applied in stand-alone systems that are designed for dedicated applications and use cases, e.g. autonomous driving, and a lot of research and development work has been conducted to develop methods and algorithms for problems arising in connection with these specific applications or use cases, wherein especially also WiFi networks have been studies in view of providing object sensing or scanning, especially focusing specifically on processing of radio channel information in order to infer relevant object information as a rather rigid, singular task. In contrast to these rather specific sensing applications, sensing in cellular mobile broadband networks typically needs to serve diverse use cases, and a mobile broadband network is built on cellular infrastructures applying a service-oriented architecture. Furthermore, while it seems probable that artificial intelligence and/or machine-learning might be able to help solve tasks such as object sensing and/or other tasks on ICaS systems, presently such artificial intelligence and/or machine-learning techniques typically heavily rely on annotated and/or labeled data during training.

### SUMMARY

An object of the present invention is to provide a technically simple, effective and cost-effective solution for providing at least one sensing-related service and/or for generating training and/or sensing model data by means of processing sensing-related data that is generated within or as part of a mobile communication network ,
wherein the mobile communication network comprises at least a first sensing-capable or sensing-enabled entity or functionality and a second sensing-capable or sensing-enabled entity or functionality,
wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data, wherein artificial intelligence and/or machine-learning techniques are able to be applied such that either a lower amount of annotated and/or labeled data is required or no annotated and/or labeled data are initially required at all. A further object of the present invention is to provide a corresponding system or mobile communication network, a corresponding sensing-capable or sensing-enabled entity or functionality, and a corresponding program and computer-readable medium.

The object of the present invention is achieved by a method for providing at least one sensing-related service and/or for generating training and/or sensing model data by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data, wherein, in order to provide at least one sensing-related service and/or in order to generate training and/or sensing model data, the method comprises the following steps:
-- in a first step, unsupervised pre-training is performed on either the first sensing-capable or sensing-enabled entity or functionality or on the second sensing-capable or sensing-enabled entity or functionality or on both,
-- in a second step, a sensing model is selected in dependence on a predefined sensing use case,
-- in a third step, a fine-tuning of the sensing model and/or a fine-tuning of the generation of the training and/or sensing model data is performed.

It is thereby advantageously possible according to the present invention to be able to reduce, by means of using un-supervised pre-training, sensing data complexity and the use-case specific model complexity with the further benefits of a reduced need for labeled data and of being able to realize faster convergence of object detection models. Especially, the object detection models of reduced complexity can be applied yielding reduced computational effort.

Especially, it is advantageously possible and preferred according to the present invention that an un-supervised pre-training is able to be applied to each individual sensing base station/TRX (hereinafter also called sensing-capable or sensing-enabled entity or functionality), focusing only on the specifically observed environment, or, alternatively, to groups of sensing base stations or sensing-capable or sensing-enabled entities or functionalities. As a consequence, it is advantageously possible to optimize autoencoder models for specific environment scenarios (e.g. rural, urban, campus, etc.), as, typically, individual sensing base station/TRX environment observations are normally static in a mobile broadband network or mobile communication network.

The pre-training, and especially the pre-training on TRX-level, advantageously allows two benefits, especially regarding the model selection and/or model generation in dependency of the intended use case(s): there are less (labeled) training data that are necessary, and a less complex model is required, as the complexity of the sensing data is reduced, which sensing data are produced per TRX (or, per sensing-enabled or software-defined entity or functionality).

In the context of the present invention, the term TRX (or transmission-reception functionality) is used almost synonymously to the term TRP (or transmission-reception-point).

In conventionally known mobile communication networks or sensing scenarios, machine-learning or deep learning techniques typically rely heavily on annotated/labeled data during training; the efficient application of these techniques (especially to ICaS) lacks from the availability of ICaS training data.

However, it needs to be determined how exactly artificial intelligence and/or machine-learning might be able to help solve tasks such as object sensing and/or other tasks on ICaS systems.

According to the present invention, at least one sensing-related service is able to be provided and/or training and/or sensing model data are able to be generated by means of processing sensing-related data that is generated within or as part of a mobile communication network, i.e. wherein at least a part or parts of the mobile communication network help to generate such sensing-related data.

According to the present invention, this is able to be realized by means of at least a first sensing-capable or sensing-enabled entity or functionality and a second sensing-capable or sensing-enabled entity or functionality. These sensing-capable or sensing-enabled entities or functionalities are typically base station entities that are used, within or as part of the mobile communication network, for communication purposes, i.e. in order to provide communication services (and especially radio coverage) to user equipments. However, also user equipments might be used, or participate, according to the present invention, in generating sensing-related data; hence, sensing-capable or sensing-enabled entities or functionalities might also correspond to user equipments.

According to the present invention, sensing relates to obtaining information regarding the environment of such a sensing-capable or sensing-enabled entity or functionality by means of using (and analyzing) incoming radiofrequency signals (sensing reception signals) that are the result of the interactions (especially reflections) of previously transmitted radiofrequency signals (sensing signals) with the environment (e.g. objects having the capability to reflect radiofrequency signals) of the sensing-capable or sensing-enabled entity or functionality, wherein the previously transmitted radiofrequency signals (sensing signals) could either be radiofrequency signals having been transmitted by the same sensing-capable or sensing-enabled entity or functionality, or radiofrequency signals (sensing signals) having been transmitted by another sensing-capable or sensing-enabled entity or functionality, or both. Hence, the at least one sensing-capable or sensing-enabled entity or functionality transmits a radiofrequency sensing signal, wherein, as a result of the radiofrequency sensing signal being transmitted, a radiofrequency sensing reception signal is received by either the (same) first sensing-capable or sensing-enabled entity or functionality or the second sensing-capable or sensing-enabled entity or functionality (or by both of them). By means of the radiofrequency sensing reception signal (or plurality of such sensing reception signals), information is able to be gathered (especially by means of at least initially processing such sensing reception signal(s)) about the environment of the first and/or second sensing-capable or sensing-enabled entities or functionalities by means of inferring sensing inference data based on training data or training procedures or training intervals.

According to the present invention, in order to provide at least one sensing-related service and/or in order to generate training and/or sensing model data, the method comprises the following steps:
-- in a first step, unsupervised pre-training is performed on either the first sensing-capable or sensing-enabled entity or functionality or on the second sensing-capable or sensing-enabled entity or functionality or on both,
-- in a second step, a sensing model is selected in dependence on a predefined sensing use case,
-- in a third step, a fine-tuning of the sensing model and/or a fine-tuning of the generation of the training and/or sensing model data is performed.

According to the present invention, it is advantageously possible and preferred that - regarding different sensing use cases - the first, second and third steps are repeated, wherein especially the same pre-training data are used for performing the unsupervised pre-training regarding different sensing use cases,
wherein especially the unsupervised pre-training is performed using the static location of the first sensing-capable or sensing-enabled entity or functionality and/or the second sensing-capable or sensing-enabled entity or functionality,
wherein especially the different sensing use cases serve multiple and diverse applications, especially comprising one or a plurality out of the following:
   -- object detection,
   -- object identification,
   -- object tracking,
   -- object monitoring,
   -- object localization,
   -- environment monitoring,
   -- environment sensing.

It is thereby advantageously possible to easily and effectively implement the inventive method.

According to the present invention, it is furthermore advantageously possible and preferred that artificial intelligence and/or machine-learning models are applied for groups of first and/or second sensing-capable or sensing-enabled entities or functionalities, wherein especially individual weights are applied per transmission-reception-point and/or antenna entity or functionality combination during unsupervised pre-training,
wherein especially different scenarios are applied for first and/or second sensing-capable or sensing-enabled entities or functionalities in rural or sub-urban environments, and in urban environments, and in indoor or campus environments,
wherein especially the unsupervised pre-training is performed using autoencoders, especially use case-specific autoencoders, in order to reduce the complexity of the radiofrequency sensing reception signal information,
wherein especially the autoencoders learn to know the specific environment seen by the first and/or second sensing-capable or sensing-enabled entities or functionalities.

It is thereby advantageously possible to easily and effectively implement the inventive method.

According to the present invention, it is furthermore advantageously possible and preferred that selecting, in the second step, a sensing model in dependence on the predefined sensing use case, involves using specific labelled data reflecting the selected sensing model,
wherein especially the selected sensing model is designed for a specific task, wherein especially a sensing model for object detection applies a deep convolutional neural network, CNN, and/or a sensing model for flood detection applies a shallow artificial neural network, ANN.

It is thereby advantageously possible to easily and effectively implement the inventive method.

Furthermore, it is advantageously possible and preferred according to the present invention that the mobile communication network comprises or is associated or assigned to at least one sensing edge server and at least one sensing application server, and wherein, based on the radiofrequency sensing reception signal and based on the training and/or sensing model data, information about the environment of the first and/or second sensing-capable or sensing-enabled entities or functionalities is able to be gathered as first stage sensing inference data, wherein the first stage sensing inference data are provided to the at least one sensing edge server for generating second stage sensing inference data, and wherein the second stage sensing inference data are provided to the at least one sensing application server for providing sensing-related services and/or generating sensing application data.

It is thereby advantageously possible to easily and effectively implement the inventive method. Especially, it is advantageously possible according to the present invention that the first step of pre-training, the second step of model-training or model selection, and the third step of model fine-tuning are able to be conducted or executed flexibly in the different functional entities (of the sensing-capable or sensing-enabled entities or functionalities, the sensing edge server and the sensing application server), e.g. (under the assumption that the sensing application server only receives the sensing results from the mobile communication network):
-- the first step in (or by) the sensing-capable or sensing-enabled entities or functionalities and steps two and three in (or by) the sensing edge server,
-- all three steps in (or by) the sensing edge server,
-- the first and the third step in (or by) the sensing-capable or sensing-enabled entities or functionalities and the second step in (or by) the sensing edge server,
-- all three steps in (or by) the sensing-capable or sensing-enabled entities or functionalities, wherein the sensing edge server only computes the results from the applied model.

Furthermore, it is advantageously possible and preferred according to the present invention that the unsupervised pre-training is performed either in a de-centralized manner - especially in, or by, the first and/or second sensing-capable or sensing-enabled entities or functionalities and/or in, or by, the at least one sensing edge server - and/or in a centralized manner - especially in, or by, the at least one sensing application server.

It is thereby advantageously possible to easily and effectively implement the inventive method.

Furthermore, the present invention relates to a system or to a mobile communication network for providing at least one sensing-related service and/or for generating training and/or sensing model data by means of processing sensing-related data that is generated within or as part of a mobile communication network,
wherein the mobile communication network comprises at least a first sensing-capable or sensing-enabled entity or functionality and a second sensing-capable or sensing-enabled entity or functionality,
wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data,
wherein, in order to provide at least one sensing-related service and/or in order to generate training and/or sensing model data, the system or mobile communication network is configured such that:
   -- unsupervised pre-training is performed on either the first sensing-capable or sensing-enabled entity or functionality or on the second sensing-capable or sensing-enabled entity or functionality or on both,
   -- a sensing model is selected in dependence on a predefined sensing use case,
   -- a fine-tuning of the sensing model and/or a fine-tuning of the generation of the training and/or sensing model data is performed.

Additionally, the present invention relates to a sensing-capable or sensing-enabled entity or functionality used for providing at least one sensing-related service and/or for generating training and/or sensing model data by means of processing sensing-related data that is generated within or as part of a mobile communication network, wherein the mobile communication network comprises the sensing-capable or sensing-enabled entity or functionality at least as a first sensing-capable or sensing-enabled entity or functionality and furthermore comprises a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality or both, wherein by means of the radiofrequency sensing reception signal information about the environment of the first and/or second sensing-capable or sensing-enabled entities or functionalities is able to be gathered by means of inferring sensing inference data based on training data,
wherein, in order to provide at least one sensing-related service and/or in order to generate training and/or sensing model data, the sensing-capable or sensing-enabled entity or functionality is configured such that:
-- unsupervised pre-training is performed on either the first sensing-capable or sensing-enabled entity or functionality or on the second sensing-capable or sensing-enabled entity or functionality or on both,
-- a sensing model is selected in dependence on a predefined sensing use case,
-- a fine-tuning of the sensing model and/or a fine-tuning of the generation of the training and/or sensing model data is performed..

Additionally, the present invention relates to a program comprising a computer readable program code, which, when executed on a computer and/or on a sensing-capable or sensing-enabled entity or functionality and/or on a sensing edge server and/or on a sensing application server, or in part on a sensing-capable or sensing-enabled entity or functionality and/or in part on a sensing edge server and/or in part on a sensing application server, causes the computer and/or the sensing-capable or sensing-enabled entity or functionality and/or the sensing edge server and/or the sensing application server to perform an inventive method.

Additionally, the present invention relates to a computer-readable medium comprising instructions which when executed on a computer and/or on a sensing-capable or sensing-enabled entity or functionality and/or on a sensing edge server and/or on a sensing application server, or in part on a sensing-capable or sensing-enabled entity or functionality and/or in part on a sensing edge server and/or in part on a sensing application server, causes the computer and/or the sensing-capable or sensing-enabled entity or functionality and/or the sensing edge server and/or the sensing application server to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically and exemplarily illustrates the field of view of sensing-capable or sensing-enabled entity or functionality for the example of a typical and typically located base station entity of a mobile communication network.

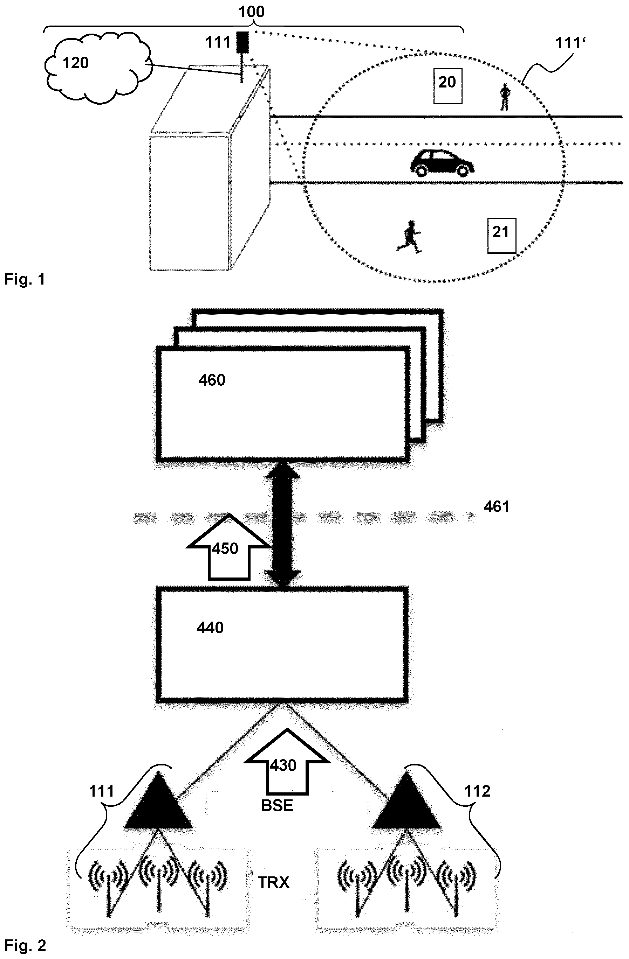

Figure 2 schematically and exemplarily illustrates a data processing scenario and a sensing data inference method that is advantageously possible to be applied according to the present invention, wherein Figure 2 also represents functional elements involved, namely, besides first and second sensing-capable or sensing-enabled entities or functionalities, a sensing edge server, processing first stage sensing inference data received from one or more of the sensing-capable or sensing-enabled entities or functionalities, and a sensing application server providing sensing-related services and/or generating sensing application data based on second stage sensing inference data received from the sensing edge server or from a plurality of sensing edge servers.
Figures 3 and 4, schematically and exemplarily illustrate examples of applying a simple layered model of an autoencoder and its two operational phases, wherein the autoencoder is especially able to learn on all input data provided by the sensing-capable and sensing-enabled entity or functionality.
Figure 5 schematically and exemplarily illustrates the possibility, according to the present invention, to address and use a set, i.e. a multitude, of different dedicated models in order to be able to serve diverse use cases and/or sensing applications.
Figures 6 to 8 schematically and exemplarily illustrate different sensing scenarios involving one or more base stations or base station entities as sensing-capable or sensing-enabled entities or functionalities.
Figure 9 schematically and exemplarily illustrates an example of data processing according to the present invention that is especially used for an object detection task in an open space scenario.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

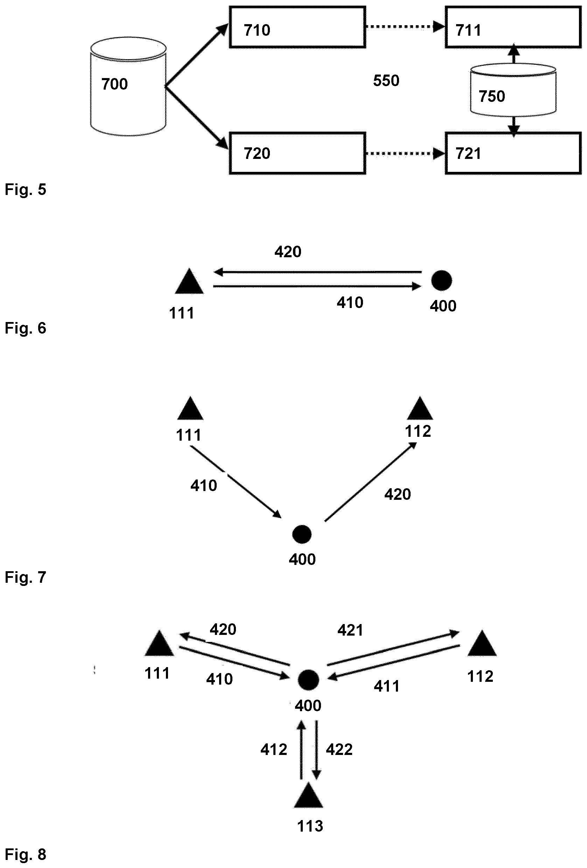

Figures 6 to 8 schematically and exemplarily illustrate different sensing scenarios involving one or more base stations or base station entities as sensing-capable or sensing-enabled entities or functionalities.

In Figure 6, a base station entity as a (first) sensing-capable or sensing-enabled entity or functionality 111 is schematically and exemplarily represented, which (first) sensing-capable or sensing-enabled entity or functionality 111 transmits signals (a radiofrequency sensing signals 410) and receives the reflected signals (a radiofrequency sensing reception signals 420), the echoes, of a target 400 in a mono-static sensing operation scenario.

In Figure 7, a bi-static operation scenario is schematically and exemplarily shown, where a target 400 is illuminated - i.e. radiofrequency sensing signals 410 sent - by a first base station entity as a first sensing-capable or sensing-enabled entity or functionality 111 and radiofrequency sensing reception signals 420 (resulting from the radiofrequency sensing signals 410) detected by a second base station entity as a second sensing-capable or sensing-enabled entity or functionality 112.

In Figure 8, a situation is schematically and exemplarily represented, where a target 400 is illuminated (i.e. radiofrequency sensing signals sent) and (radiofrequency sensing reception signals) detected, respectively, by a first, second and third base station entity as first, second and third sensing-capable or sensing-enabled entities or functionalities 111, 112, 113 (i.e. Figure 8 depicts mono-static sensing of three base stations 111, 112, 113). The first sensing-capable or sensing-enabled entity or functionality 111 sends, or transmits, a first radiofrequency sensing signal 410 and receives - as a result thereof - a first radiofrequency sensing reception signal 420. The second sensing-capable or sensing-enabled entity or functionality 112 sends, or transmits, a second radiofrequency sensing signal 411 and receives - as a result thereof - a second radiofrequency sensing reception signal 421. The third sensing-capable or sensing-enabled entity or functionality 113 sends, or transmits, a third radiofrequency sensing signal 412 and receives - as a result thereof - a third radiofrequency sensing reception signal 422. Furthermore, it is conceivable that, especially depending on the respective timing of the first, second and third radiofrequency sensing signals 410, 411, 412, e.g., the first radiofrequency sensing reception signal 420 is a result, especially besides the first radiofrequency sensing signal 410, of at least one of the second and third radiofrequency sensing signals 411, 412, and analogously for the other radiofrequency sensing reception signals 421, 422.

Typically, in mono-static operation - cf. Figure 6-, the transmitter (of radiofrequency sensing signals 410, 411, 412) and the receiver (of radiofrequency sensing reception signals 420, 421, 422) are co-located in the sensing-capable or sensing-enabled entities or functionalities 111, 112, 113 (i.e., typically base station entities and/or user equipments), respectively, especially with full-duplex capability. The measurements of ToA (Time-of-Arrival), AoA (Angle-of-Arrival), AoD (Angle-of-Departure), and Doppler of each of the resolved (radiofrequency signal propagation) paths correspond to the detection of a target 400, where the location is relative to the coordinate system of the sensing-capable or sensing-enabled entities or functionalities 111, 112, 113 (i.e., typically base station entities and/or user equipments), respectively.

In contrast to mono-static operation, in bi/multi-static operation - cf. Figure 7 and also Figure 8-, the transmitter (of radiofrequency sensing signals 410, 411, 412) and the receiver (of radiofrequency sensing reception signals 420, 421, 422) are located at different sites, i.e. a (radiofrequency sensing) signal between two sensing-capable or sensing-enabled entities or functionalities such as a base station entity and a user equipment, such signal to the user equipment is able to be used to estimate ToA, AoA, AoD, and Doppler of each of the resolved (radiofrequency signal propagation) paths. In case the two sensing-capable or sensing-enabled entities or functionalities rather correspond to two base station entities, the targets are detected, and their location estimated especially in an absolute joint coordinate system of these base station entities.

Figure 1 schematically and exemplarily illustrates the field of view 111' of a sensing-capable or sensing-enabled entity or functionality 111, for the example a typical and typically located base station entity 111 of a mobile communication network 100. In a known manner, the base station entity 111 is part of a radio access network (not separately represented in Figure 1 and designated by a reference sign) of the mobile communication network 100, wherein the mobile communication network 100 typically comprises, or is at least associated with or assigned to, a core network 120. As part of the field of view 111', the sensing-capable or sensing-enabled entity or functionality 111 might, e.g. be able to realize an object detection such as regarding a vehicle and or persons.

Furthermore, Figure 1 exemplarily shows a user equipment 20 and a further user equipment 21 being located such as to be provided with radio coverage by the base station entity 111.

Figure 2 schematically and exemplarily illustrates a data processing scenario and a sensing data inference method that is advantageously possible to be applied according to the present invention, wherein Figure 2 also represents functional elements involved, namely, besides first and second sensing-capable or sensing-enabled entities or functionalities 111, 112, a sensing edge server 440, processing first stage sensing inference data 430 received from one or more of the sensing-capable or sensing-enabled entities or functionalities 111, 112, and a sensing application server 460 providing sensing-related services and/or generating sensing application data based on second stage sensing inference data 450 received from the sensing edge server 440 or from a plurality of sensing edge servers 440. Especially, the sensing edge server 440 (or, plurality of sensing edge servers 440) use a network application programming interface 461 of or associated with the sensing application server(s) 460.

The sensing-capable or sensing-enabled entities or functionalities 111, 112 are typically realizes as base station entities, BSE, and comprise transmission-reception-points and or transmission-reception functionality, TRX.

Hence, Figure 2 shows the functional elements involved and an embodiment of cascading of sensing data inference, i.e. the sensing-capable or sensing-enabled entities or functionalities 111, 112 generate - from or based on the processing of radiofrequency sensing signals 420, 421, 422 and especially by means of, typically, a plurality transceivers (TRX) or transceiver station illuminating sensing targets and providing raw sensing data towards base stations or base station entities (BSE), the base stations aggregating sensing data from the one or multiple transceivers TRX - first stage sensing inference data 430, and provide these first stage sensing inference data 430 to the sensing edge server 440 (or to the plurality of sensing edge servers). Based on the first stage sensing inference data 430, the sensing edge server 440 generates second stage sensing inference data 450 (i.e. the sensing edge server 440 infers object data from radio sensing information) and provides or transmits those to the sensing application server 460 in order for the sensing application server 460 to be able to provide sensing-related services and/or generate sensing application data (i.e. the sensing application server 460 provides application for the dedicated use case). It may be the case that the sensing application server 460 (or, rather, the plurality of sensing application servers 460) is not part of the mobile broadband network, or mobile communication network 100; in this case, the sensing application server 460 (or the plurality thereof) is typically able to access the sensing-as-a-service functionality via a network application programming interface (API) 461.

It is thereby advantageously and preferably possible, according to the present invention, to make use of the hierarchical and service-oriented architecture of the cellular mobile broadband network 100.

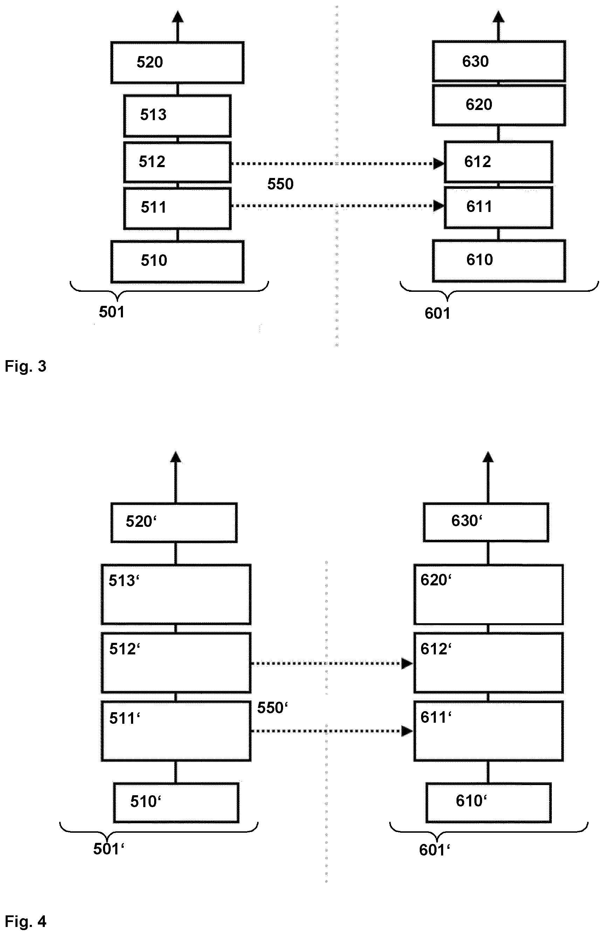

Figures 3 and 4, schematically and exemplarily illustrate examples of applying a simple layered model of an autoencoder and its two operational phases, wherein the autoencoder is especially able to learn on all input data provided by the sensing-capable and sensing-enabled entity or functionality.

Especially, Figure 3 schematically shows an exemplary embodiment of applying a simple layered model of using an autoencoder and its two operational phases: a first phase 501 and a second phase 601. In the first phase 501, input data 510 are used and processed by the autoencoder or the autoencoder entity or functionality. This, typically leads to different kinds (or stages) of intermediate (or hidden) layer (schematically represented by stages/reference signs 511, 512, 513; first stage of (first phase) hidden data 511, second stage of (first phase) hidden data 512, third stage of (first phase) hidden data 513), and finally to output data 520. Likewise, in the second phase 601, input data 610 are used and processed by the same or a different autoencoder or autoencoder entity or functionality, this - again - leading to different kinds (or stages) of intermediate (or hidden) data (schematically represented by stages/reference signs 611, 612; first stage of (second phase) hidden data 611, second stage of (second phase) hidden data 612), and finally to output data 620 (as well as to information regarding a use case-specific classifier 630). Especially, (copy) parameters 550 are able to be derived from results during the first phase 501, especially from one or a plurality of the intermediate (or hidden) data 511, 512, 513; such (copy) parameters 550 typically being used, during the second phase 601 (especially these parameters are copied); in the exemplary embodiment shown in Figure 3, the (copy) parameters 550 are obtained, or derived from the first stage of (first phase) hidden data 511 and provided to the first stage of (second phase) hidden data 611 as well as obtained, or derived from the second stage of (first phase) hidden data 512 and provided to the second stage of (second phase) hidden data 612.

Especially according to the exemplary embodiment shown in Figure 3, during the first phase 501, the autoencoder or autoencoder entity or functionality is trained with (or based on) all available data, whereas, during the second phase 601, a "use case" is trained with (or based on) labeled data.

Likewise, figure 4 schematically shows a further exemplary embodiment of applying a simple layered model of using an autoencoder and its two operational phases: a first phase 501' and a second phase 601'. In the first phase 501', input data 510' are used and processed by the autoencoder or the autoencoder entity or functionality. This, typically leads to different kinds (or stages) of intermediate object autoencoder submodels (schematically represented by stages/reference signs 511', 512`, 513`; first (first phase) autoencoder submodel 511', second (first phase) autoencoder submodel 512`, third (first phase) autoencoder submodel 513`), and finally to output data 520`. Likewise, in the second phase 601', input data 610' are used and processed by the same or a different autoencoder or autoencoder entity or functionality, this - again - leading to different kinds (or stages) of intermediate object autoencoder submodels (schematically represented by stages/reference signs 611`, 612`; first (second phase) autoencoder submodel 611', second (second phase) autoencoder submodel 612`), and finally to an object detection model 620' (as well as to output data 630`). Especially, (copy) parameters 550' are able to be derived from results during the first phase 501', especially from one or a plurality of the (first phase) autoencoder submodels 511', 512`, 513`; such (copy) parameters 550' typically being used, during the second phase 601' (especially these parameters are copied); in the exemplary embodiment shown in Figure 3, the (copy) parameters 550` are obtained, or derived from the first (first phase) autoencoder submodel 511' and provided to the first (second phase) autoencoder submodel 611' as well as obtained, or derived from the second (first phase) autoencoder submodel 512' and provided to the second (second phase) autoencoder submodel 612`.

Especially according to the exemplary embodiment shown in Figure 4, during the first phase 501', the autoencoder or autoencoder entity or functionality is trained with (or based on) all available data, whereas, during the second phase 601', a "use case" is trained with (or based on) labeled data.

Figure 5 schematically and exemplarily illustrates the possibility, according to the present invention, to address and use a set, i.e. a multitude, of different dedicated models in order to be able to serve diverse use cases and/or sensing applications, and, especially, to be able to use artificial intelligence and/or machine-learning based on either less annotated and/or labeled data during training or based on even no (previously) annotated and/or labeled data during training at all: Based on pre-training data 700 a first autoencoder 710 or autoencoder entity or functionality 710 is used in order to obtain a corresponding use case model 711, and a second autoencoder 720 or autoencoder entity or functionality 720 is used in order to obtain a corresponding use case model 721, wherein labeled data 750 are used in order to obtain the use case models 711, 721 and wherein (copy) parameters are transferred or used (or copied) in order to obtain the use case models 711, 712.

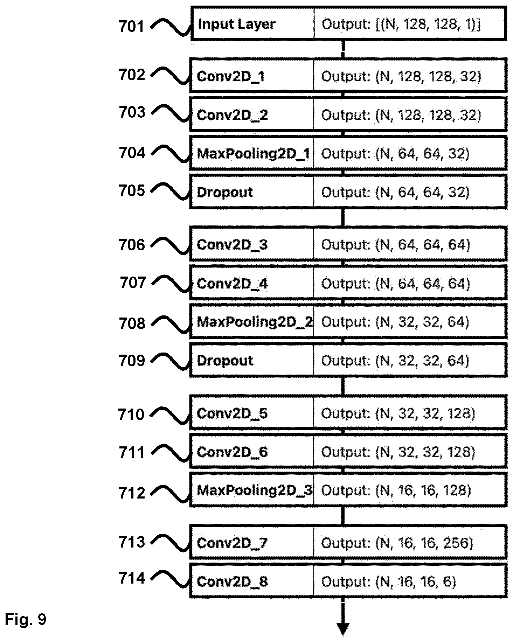

Figure 9 schematically and exemplarily illustrates a Convolutional Neural Network for object detection of reduced complexity for one realization of the present invention that is especially used for an object detection task in an open space scenario and regarding the second step of the present invention (the input sensing image (raw data as well as the processed data of the previous step, i.e. the first step of the present invention) is of size 128 x 128. By applying a medium sized neural network with multiple convolutional layers and max pooling layers, the model output layer Conv2D_8 will provide detection results in a 16 x 16 grid with 6 values per grid element. These values provide inference results on object detection probability, location within the grid element and classification indications):
In a first processing step 701, data are provided, to the artificial intelligence/machine-learning entity or functionality used, by means of using an input layer, especially having an output shape of [(N, 128, 128, 1)].
In a second processing step 702, the output data of the first processing step 701 are provided to a first two-dimensional convolutional layer (conv2D_1), especially having an output shape of [(N, 128, 128, 32)].
In a third processing step 703, the output data of the second processing step 702 are provided to a second two-dimensional convolutional layer (conv2D_2), especially having an output shape of [(N, 128, 128, 32)].
In a fourth processing step 704, the output data of the third processing step 703 are provided to a first max pooling operation for 2D spatial data (MaxPooling2D_1), especially having an output shape of [(N, 64, 64, 32)].
In a fifth processing step 705, the output data of the fourth processing step 704 are provided to a first dropout layer or step, especially having an output shape of [(N, 64, 64, 32)], wherein dropout is a technique where randomly selected neurons are ignored during training; they are especially "dropped out" randomly.
In a sixth processing step 706, the output data of the fifth processing step 705 are provided to a third two-dimensional convolutional layer (conv2D_3), especially having an output shape of [(N, 64, 64, 64)].
In a seventh processing step 707, the output data of the sixth processing step 706 are provided to a fourth two-dimensional convolutional layer (conv2D_4), especially having an output shape of [(N, 64, 64, 64].
In an eighth processing step 708, the output data of the seventh processing step 707 are provided to a second max pooling operation for 2D spatial data (MaxPooling2D_2), especially having an output shape of [(N, 32, 32, 64)].
In a nineth processing step 709, the output data of the eighth processing step 708 are provided to a second dropout layer or step, especially having an output shape of [(N, 32, 32, 64)].
In a tenth processing step 710, the output data of the nineth processing step 709 are provided to a fifth two-dimensional convolutional layer (conv2D_5), especially having an output shape of [(N, 32, 32, 128)].
In an eleventh processing step 711, the output data of the tenth processing step 710 are provided to a sixth two-dimensional convolutional layer (conv2D_6), especially having an output shape of [(N, 32, 32, 128].
In a twelfth processing step 712, the output data of the eleventh processing step 711 are provided to a third max pooling operation for 2D spatial data (MaxPooling2D_3), especially having an output shape of [(N, 16, 16, 128)].
In a thirteenth processing step 713, the output data of the twelfth processing step 712 are provided to a seventh two-dimensional convolutional layer (conv2D_7), especially having an output shape of [(N, 16, 16, 256)].
In a fourteenth processing step 714, the output data of the thirteenth processing step 713 are provided to an eighth two-dimensional convolutional layer (conv2D_8), especially having an output shape of [(N, 16, 16, 6 ].

According to the present invention, a method is suggested for providing at least one sensing-related service and/or for generating training and/or sensing model data by means of processing sensing-related data that is generated within or as part of a mobile communication network 100. The mobile communication network 100 comprises at least a first sensing-capable or sensing-enabled entity or functionality 111, 20 and a second sensing-capable or sensing-enabled entity or functionality 112, 21, wherein the sensing-capable or sensing-enabled entities or functionalities are especially base station entities 111, 112 - i.e. typically part of the (typically fixedly positioned) infrastructure of the mobile communication network 100. Having said this, it is, however, not excluded, according to the present invention, that user equipments 20, 21 or mobile stations 20, 21 are also used, in addition to using such base station entities, as sensing-capable or sensing-enabled entities or functionalities; of course, this typically requires a mechanism to transmit such sensing-related data from the respective user equipments 20, 21 to some entity or network node of the mobile communication network 100. In any case, sensing functionality relies on at least one sensing-capable or sensing-enabled entity or functionality 111, 20 transmitting a radiofrequency sensing signal 410, and, as a result of the radiofrequency sensing signal 410 being transmitted, a radiofrequency sensing reception signal 420 being received by either the first sensing-capable or sensing-enabled entity or functionality 111 or the second sensing-capable or sensing-enabled entity or functionality 112 or both, wherein by means of the radiofrequency sensing reception signal 420 information about the environment of the first and/or second sensing-capable or sensing-enabled entities or functionalities 111, 112 is able to be gathered by means of inferring sensing inference data based on training data.

In order to provide at least one sensing-related service and/or in order to generate training and/or sensing model data, the method comprises the following steps:
-- in a first step, unsupervised pre-training is performed on either the first sensing-capable or sensing-enabled entity or functionality 111 or on the second sensing-capable or sensing-enabled entity or functionality 112 or on both,
-- in a second step, a sensing model is selected in dependence on a predefined sensing use case,
-- in a third step, a fine-tuning of the sensing model and/or a fine-tuning of the generation of the training and/or sensing model data is performed.

According to the present invention, it is especially preferred to apply artificial intelligence/machine-learning techniques to solve object sensing and other sensing tasks on ICaS systems; however, presently known machine-learning/deep-learning techniques typically heavily rely on annotated/labeled data during training, and the efficient application of these techniques lacks from the availability of ICaS training data.

This is in contrast to other use cases - e.g. autonomuous driving; however training data in these areas are typically not well suited to be directly used in ICaS systems as - in contrast to sensing base stations in the ICaS case, autonomous driving cameras or radars have to deal with "radars in motion" most of the time; hence, for ICaS in mobile broadband networks, only the stationary subset of training data can be used. Another limitation of transfer learning from autonomous driving artificial intelligence /machine-learning is determined by the very different aspect ratio and visual plane of ICaS sensing base stations (sensing-capable or sensing-enabled entities or functionalities 111, 112, 20, 21) vs. car embedded radars, respectively. Models learned on objects detected from the front view of a car radar will show a degraded performance when transferred to ICaS systems, especially since sensing base station antennas (TRX) will experience a large variety of aspect ratios and visual planes (or fields of view) - resulting from their diverse locations.

According to the present invention, three steps are defined that are applied to an ICaS system (cf. Figure 2):
1. unsupervised pre-training on per sensing base station transceiver/antenna-data (i.e. on per sensing-capable or sensing-enabled entity or functionality 111, 112, 20, 21)
2. model-selection per use case
3. fine-tuning of selected model for the specific sensing tasks applying a small amount of training data.

According to the present invention, it is especially proposed to specifically apply these techniques to ICaS sensing in a cellular mobile broadband network (mobile communication network 100) and its diverse use case demands.

For instance, pre-training of data makes use of the static location of sensing bases station antennas leading to rather static sensing results on long term observations, in contrast to moving automotive radars.

For object detection in the final model, findings from automotive radars can be partly applied, but need to be adapted to the field of view of a sensing base station (cf. Figure 1).

Finally, in contrast to single-use case solutions like automotive radars or maritime and aeronautic radars, ICaS-based sensing has to serve multiple and even diverse applications.

Hence, it is proposed, according to the present invention, to apply the above mentioned steps 1 to 3 for each specific application/use case that is to be served by ICaS sensing. Though diverse application models are "learned", they make use of a common set of pre-training data.

According to the present invention, it is especially advantageous that only a small set of labeled data is needed for the fine-tuning of the specific application model.

Model training and the subsequent inference on the trained model is performed differently. Model training is done either de-centralized in base stations/sensing edge server or in a centralized high performance processing unit based on the captured data from individual TRXs. After training and finetuning, the model(s) are applied to base stations or sensing edge server for inference on real data in real time.

It is especially preferred, according to the present invention, that - regarding different sensing use cases - the first, second and third steps are repeated, wherein especially the same pre-training data are used for performing the unsupervised pre-training regarding different sensing use cases,
wherein especially the unsupervised pre-training is performed using the static location of the first sensing-capable or sensing-enabled entity or functionality 111 and/or the second sensing-capable or sensing-enabled entity or functionality 112,
wherein especially the different sensing use cases serve multiple and diverse applications, especially comprising one or a plurality out of the following:
   -- object detection,
   -- object identification,
   -- object tracking,
   -- object monitoring,
   -- object localization,
   -- environment monitoring,
   -- environment sensing.

Furthermore, it is preferred that artificial intelligence and/or machine-learning models are applied for groups of first and/or second sensing-capable or sensing-enabled entities or functionalities 111, 112, wherein especially individual weights are applied per transmission-reception-point and/or antenna entity or functionality combination during unsupervised pre-training,
wherein especially different scenarios are applied for first and/or second sensing-capable or sensing-enabled entities or functionalities 111, 112 in rural or sub-urban environments, and in urban environments, and in indoor or campus environments,
wherein especially the unsupervised pre-training is performed using autoencoders, especially use case-specific autoencoders, in order to reduce the complexity of the radiofrequency sensing reception signal 420 information,
wherein especially the autoencoders learn to know the specific environment seen by the first and/or second sensing-capable or sensing-enabled entities or functionalities 111, 112.

Additionally, it is preferred according to the present invention that selecting, in the second step, a sensing model in dependence on the predefined sensing use case, involves using specific labelled data reflecting the selected sensing model,
wherein especially the selected sensing model is designed for a specific task, wherein especially a sensing model for object detection applies a deep convolutional neural network, CNN, and/or a sensing model for flood detection applies a shallow artificial neural network, ANN.

First step: unsupervised pre-training:
artificial intelligence/machine-learning models have to cope with a massive variety of sensing base TRX/antenna sensing environments. It seems not to be realistic, that a single trained model may be applied in all scenarios. The extreme other case is, that per base station TRX a dedicated model is trained with specific weights.

According to the present invention, it is especially preferred that single machine-learning models are applied for groups of base station scenarios whereby individual model weights are applied per TRX/antenna combination during pre-training. Such diverse scenarios may be:
a. bases stations in rural/sub-urban environments;
b. base stations in (dense) urban environments;
c. base stations in indoor/Campus environments.

Other dependencies may impact the selection of the autoencoder approach:
-- selected use case and application (see also next section): autoencoder-to-app allocation may be rather statically assigned or may be dynamically assigned
-- general conditions of observed environment: e.g. type of material sensed (water, buildings, metal, vegetation), weather conditions, amount of moving vs. static objects Hence multiple autoencoders may be assigned regarding these dependencies.

This results in diverse pre-training models a., b., and c. used for pre-training on the respective Sensing Base Station TRX/antenna data.

In all cases self-supervised learning on individual TRX/antenna sensing data is performed. For instance, a single TRX captures sensing data from the "observed" area (cf. Figure 1) for several hours or days. This data is used to feed self-supervised learning methods (i.e. pre-training models a., b. and c., respectively).

Self-supervised learning during pre-training can, e.g., be performed by autoencoders. Autoencoders are used for complexity reduction of input data.

Especially, Figure 3 shows a simple layered model of an autoencoder and its two operation phases: In the first phase 501, the autoencoder learns on all input data provided by the Sensing Base Station TRX. The main purpose of this approach is to "squeeze out" only the important information from the input data. For instance, in the ICaS sensing case, in an object detection task unwanted clutter (as known from radar systems) needs to be removed in order to reduce data and model complexity. On the other hand, in a flood detection task, the same clutter (e.g. reflections from wet surfaces) becomes valuable information that has to be maintained, whereas other input data can be removed. Hence, autoencoder architecture and pre-training may vary between sensing use cases.

Autoencoder architectures are typically defined on two dimensions: first, base station environment scenario (a., b., c.), second use case/application to be served (i. e. object detection, environment monitoring, etc.); the parameters, i.e. model weights, learned in the first phase 501 are transferred to a use case-specific model in the second phase 601.

Second step: model selection per use case:
As already stated, sensing in ICaS systems is especially required to serve a rather large spectrum of use cases/applications. In order to enable such a diversity of use cases, it is especially proposed, according to the present invention, that a set of dedicated models with respective pre-training needs to be supported also in the second phase 601 of Figure 3. This is schematically shown in Figure 5: According to the present invention, it is especially preferred that with one unique set of pre-training data 700 use case-specific autoencoders 710, 720 are pre-trained providing initial parameters for the use-case specific models as shown on Figure 4.

Especially, the individual models are designed for the specific task, respectively. For instance, a model for object detection may apply a deep Convolutional Neural Network (CNN). Whereas, for a flood detection task, a shallow Artificial Neural Network (ANN) may be applied.

Third step: model fine-tuning:
According to the present invention, it is especially preferred that model fine-tuning is performed such as to adapt the model for the specific (sensing) task. Based on the pre-training phase, the model "knows" already the relative parameters determined by the individual sensing base station TRX/antenna environment, i.e. the respective sensing-capable or sensing-enabled entity or functionality 111, 112, 20, 21.

Especially according to the present invention, the objective of fine-tuning is to strengthen the model's sensitivity for events of the individual use case as shown in the right part of Figure 5.

For model fine-tuning, especially a (small) amount of labeled data according to the use case is typically needed.

For object detection, cross-modal sensing can be applied. One option that is possible according to the present invention is to apply RGB image detection from dedicated cameras.

Another alternative that is likewise possible according to the present invention, is to make use of well-established positioning mechanisms for cross-model sensing and labeling of data.

In outdoor scenarios, precise positioning applying GNSS-based (global navigation satellite system-based) RTK (real time kinematic) can be used. By this, cm-accuracy can be achieved when preparing dedicated objects for model fine-tuning training.

In indoor scenarios, 5G-based RTLS (real time locating systems) applying UWB (ultra-wideband) positioning can be used. Since, GNSS service is not available indoors, setting up a short term 5G-based RTLS eases the generation of labeled data for model fine-tuning.

In the following an example of an approach regarding an object detection task in an open space scenario or environment is provided:
This scenario may take place, for instance, at outdoor parking spaces. In Figure 4, this approach is represented and can be applied for a general object detection task. The raw sensing images provided by a sensing base station do comprise - together with the potential object information - a lot of unwanted clutter.

In the first phase 501' of a specifically designed autoencoder for object detection tasks (cf. Figure 4), the un-supervised model learns to reduce sensing complexity and to extract only reasonable object information. According to the present invention, this task is performed autonomously, and especially per sensing base station/TRX.

The task to be learned by the autoencoder is determined by the specific environment in which the sensing base station/TRX is installed, respectively.

It is especially preferred, according to the present invention, that, at installation time, the appropriate autoencoder model is selected, e.g. according to the following:
a. base stations in rural/sub-urban environments;
b. base stations in (dense) urban environments;
c. base stations in Campus environments.

In the open space example addressed here, scenario c would be applied.

However, according to another embodiment of the present invention, an automatic selection of the appropriate autoencoder model is possible.

In a learning phase, the autoencoder learns to "know" the specific environment seen by the specific sensing base station/TRX.

Especially, this may be applied during times of relative low mobile network activity and low environment activity, e.g. during night time. During this training duration all sensing data is captured at the specific sensing base station/TRX. According to one alternative, it is processed in real time at the sensing base station site; alternatively, it is processed at a remote location, in real-time or post-processed, e.g. a sensing edge server. During training, the model will apply all data observed by the sensing base station/TRX. Since un-supervised pre-training is applied, no labeling of the data is required.

In either case (of either local real time processing or (post-)processing at a remote location), the results are stored and allocated per sensing base station/TRX. Periodically or on a regular basis, the autoencoder may update this learning process to react on changes in the specific environment.

By this, the object detection model (cf. the right hand side of Figure 4) does not need to train on sensing data with high variance (e.g. unwanted clutter is already removed), resulting from diverse base station environments or sensing observations. Instead, the detection model will be fine-tuned based on the pre-trained results of a specific sensing base station/TRX.

Only a comparatively small amount of labeled sensing data for a specific Sensing Base Station is needed for model fine-tuning. This results in a faster training process of the object detection model. Furthermore, resulting from the complexity reduction during un-supervised pre-training step, use-case specific models of reduced complexity, and hence reduced computational demand, may be applied.

First Step - removing unwanted clutter in open space environment:
The autoencoder chosen especially makes use of a Convolutional Neural Network (CNN) as, e.g. shown in Figure 4, making use of a convolutional encoder (composed of convolutional layers and pooling layers) and a convolutional decoder (upscaling with transpose convolutional layers). Thereby, the convolutional encoder reduces the dimensionality of the input (i.e. height and width) while increasing the depth (i.e. the number of the model's feature maps). The convolutional decoder performs upscaling to the original image size.

By this approach the model is forced to 'learn' only the important features.

With respect to Figure 4 (in an implementation, the object autoencoder sub-models are, e.g., realized in Tensorflow):
-- object autoencoder sub-model 1: Convolutional Encoder
-- object autoencoder sub-model 2: GlobalAveragePooling2D layer
-- object autoencoder sub-model 3: Convolutional Decoder

By proper design of convolutional encoder, convolutional decoder (for instance: N x Conv2D/MaxPool2D layers in convolutional encoder and M x Conv2D transpose layers in convolutional decoder) and controlled un-supervised training of the object autoencoder, clutter from the original data can be significantly reduced, whereby the objects become more 'visible'.

In this rather simple open space example, a relaxed configuration with N=1 and M=1 can be applied.

Second step - object localization in open space environment:
Based on such cleaned data, an object detection model with reduced complexity can be applied, as the scenario-specific variance in the raw data is removed. In this open space example, variance is mainly determined by noisy clutter, while in other scenarios static obstacles will produce other types of clutter, that that needs to be removed accordingly.

In this example, the model output of object detection will provide the coordinates of the detected objects. Depending on the use case or sensing scenario, object classification (e.g. 'pedestrian', 'cyclist' or 'car') might be realized or, alternatively, might be chosen to not be realized.

Especially, the input sensing image (raw data as well as the processed data of the previous step) is chosen to be of a suitable size, e.g. of 128 x 128 (pixels).

The chosen detection model is shown in Figure 9. By applying a medium sized neural network with multiple convolutional layers and max pooling layers, the model output layer Conv2D_8 will provide detection results in a 16 x 16 grid with 6 values per grid element. These values provide inference results on object detection probability, location within the grid element and classification indications.

During model training, a custom loss function is applied, applying individual cost functions to the respective parameters.

This results, according to the present invention, in the following: based on the raw sensing data in the first step, the unwanted clutter is removed and in the second step the objects are identified and localized. Hence, with preprocessing of the raw sensing data (i.e. applying the first step - autoencoder) the object detection model converges much faster and with a reduced amount of labeled data than by using the raw sensing data only.

Hence, according to the present invention, it is advantageously possible to reduce, by means of using un-supervised pre-training, sensing data complexity; this especially yields to faster convergence of object detection models with reduced need for labeled data. Furthermore, the object detection models of reduced complexity can be applied yielding reduced computational effort. An un-supervised pre-training is especially applied to each individual sensing base station/TRX focusing only on the specifically observed environment. Autoencoder models are able to be optimized for specific environment scenarios (e.g. rural, urban, campus, etc.), since individual sensing base station/TRX environment observations are static in a mobile broadband network.

As a consequence: Instead of dealing with quite a huge number of base station entities (e.g. all 10.000s sensing base stations/TRXs in a mobile broadband network) with only one large-scale machine learning model, individually trained small-scale machine learning models are applied. This advantageously allows to serve large amounts of application requests with reduced computational effort; furthermore, by means of un-supervised pretraining, operational complexity is able to be minimized.

The proposed method is especially applicable for object detection but this general approach also applies for other use cases (e.g. flood detection), with only differing autoencoders used and use case models that are selected according to application demand or use case scenario.

## Claims

1. Method for providing at least one sensing-related service and/or for generating training and/or sensing model data by means of processing sensing-related data that is generated within or as part of a mobile communication network (100),
wherein the mobile communication network (100) comprises at least a first sensing-capable or sensing-enabled entity or functionality (111, 20) and a second sensing-capable or sensing-enabled entity or functionality (112, 21), wherein the at least one sensing-capable or sensing-enabled entity or functionality (111, 20) transmits a radiofrequency sensing signal (410),
wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and/or second sensing-capable or sensing-enabled entities or functionalities (111, 112) is able to be gathered by means of inferring sensing inference data based on training data,
wherein, in order to provide at least one sensing-related service and/or in order to generate training and/or sensing model data, the method comprises the following steps:
-- in a first step, unsupervised pre-training is performed on either the first sensing-capable or sensing-enabled entity or functionality (111) or on the second sensing-capable or sensing-enabled entity or functionality (112) or on both,
-- in a second step, a sensing model is selected in dependence on a predefined sensing use case,
-- in a third step, a fine-tuning of the sensing model and/or a fine-tuning of the generation of the training and/or sensing model data is performed.

2. Method according to claim 1, wherein - regarding different sensing use cases
- the first, second and third steps are repeated, wherein especially the same pre-training data are used for performing the unsupervised pre-training regarding different sensing use cases,
wherein especially the unsupervised pre-training is performed using the static location of the first sensing-capable or sensing-enabled entity or functionality (111) and/or the second sensing-capable or sensing-enabled entity or functionality (112),
wherein especially the different sensing use cases serve multiple and diverse applications, especially comprising one or a plurality out of the following:
-- object detection,
-- object identification,
-- object tracking,
-- object monitoring,
-- object localization,
-- environment monitoring,
-- environment sensing.

3. Method according to one of the preceding claims, wherein artificial intelligence and/or machine-learning models are applied for groups of first and/or second sensing-capable or sensing-enabled entities or functionalities (111, 112),
wherein especially individual weights are applied per transmission-reception-point and/or antenna entity or functionality combination during unsupervised pre-training,
wherein especially different scenarios are applied for first and/or second sensing-capable or sensing-enabled entities or functionalities (111, 112) in rural or sub-urban environments, and in urban environments, and in indoor or campus environments,
wherein especially the unsupervised pre-training is performed using autoencoders, especially use case-specific autoencoders, in order to reduce the complexity of the radiofrequency sensing reception signal (420) information,
wherein especially the autoencoders learn to know the specific environment seen by the first and/or second sensing-capable or sensing-enabled entities or functionalities (111, 112).

4. Method according to one of the preceding claims, wherein selecting, in the second step, a sensing model in dependence on the predefined sensing use case, involves using specific labelled data reflecting the selected sensing model,
wherein especially the selected sensing model is designed for a specific task,
wherein especially a sensing model for object detection applies a deep convolutional neural network, CNN, and/or a sensing model for flood detection applies a shallow artificial neural network, ANN.

5. Method according to one of the preceding claims, wherein the mobile communication network (100) comprises or is associated or assigned to at least one sensing edge server (440) and at least one sensing application server (460), and wherein, based on the radiofrequency sensing reception signal (420) and based on the training and/or sensing model data, information about the environment of the first and/or second sensing-capable or sensing-enabled entities or functionalities (111, 112) is able to be gathered as first stage sensing inference data (430), wherein the first stage sensing inference data (430) are provided to the at least one sensing edge server (440) for generating second stage sensing inference data (450), and wherein the second stage sensing inference data (450) are provided to the at least one sensing application server (460) for providing sensing-related services and/or generating sensing application data.

6. Method according to one of the preceding claims, wherein the unsupervised pre-training is performed either in a de-centralized manner - especially in, or by, the first and/or second sensing-capable or sensing-enabled entities or functionalities (111, 112) and/or in, or by, the at least one sensing edge server (440) - and/or in a centralized manner - especially in, or by, the at least one sensing application server (460).

7. System or mobile communication network (100) for providing at least one sensing-related service and/or for generating training and/or sensing model data by means of processing sensing-related data that is generated within or as part of a mobile communication network (100),
wherein the mobile communication network (100) comprises at least a first sensing-capable or sensing-enabled entity or functionality (111, 20) and a second sensing-capable or sensing-enabled entity or functionality (112, 21), wherein the at least one sensing-capable or sensing-enabled entity or functionality (111, 20) transmits a radiofrequency sensing signal (410),
wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and/or second sensing-capable or sensing-enabled entities or functionalities (111, 112) is able to be gathered by means of inferring sensing inference data based on training data,
wherein, in order to provide at least one sensing-related service and/or in order to generate training and/or sensing model data, the system or mobile communication network (100) is configured such that:
-- unsupervised pre-training is performed on either the first sensing-capable or sensing-enabled entity or functionality (111) or on the second sensing-capable or sensing-enabled entity or functionality (112) or on both,
-- a sensing model is selected in dependence on a predefined sensing use case,
-- a fine-tuning of the sensing model and/or a fine-tuning of the generation of the training and/or sensing model data is performed.

8. Sensing-capable or sensing-enabled entity or functionality (111, 20) used for providing at least one sensing-related service and/or for generating training and/or sensing model data by means of processing sensing-related data that is generated within or as part of a mobile communication network (100), wherein the mobile communication network (100) comprises the sensing-capable or sensing-enabled entity or functionality (111, 20) at least as a first sensing-capable or sensing-enabled entity or functionality (111, 20) and furthermore comprises a second sensing-capable or sensing-enabled entity or functionality (112, 21),
wherein the at least one sensing-capable or sensing-enabled entity or functionality (111, 20) transmits a radiofrequency sensing signal (410), wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and/or second sensing-capable or sensing-enabled entities or functionalities (111, 112) is able to be gathered by means of inferring sensing inference data based on training data,
wherein, in order to provide at least one sensing-related service and/or in order to generate training and/or sensing model data, the sensing-capable or sensing-enabled entity or functionality (111, 20) is configured such that:
-- unsupervised pre-training is performed on either the first sensing-capable or sensing-enabled entity or functionality (111) or on the second sensing-capable or sensing-enabled entity or functionality (112) or on both,
-- a sensing model is selected in dependence on a predefined sensing use case,
-- a fine-tuning of the sensing model and/or a fine-tuning of the generation of the training and/or sensing model data is performed.

9. Program comprising a computer readable program code, which, when executed on a computer and/or on a sensing-capable or sensing-enabled entity or functionality (111, 20, 112, 21) and/or on a sensing edge server (440) and/or on a sensing application server (460), or in part on a sensing-capable or sensing-enabled entity or functionality (111, 20, 112, 21) and/or in part on a sensing edge server (440) and/or in part on a sensing application server (460), causes the computer and/or the sensing-capable or sensing-enabled entity or functionality (111, 20, 112, 21) and/or the sensing edge server (440) and/or the sensing application server (460) to perform a method according one of claims 1 to 6.

10. Computer-readable medium comprising instructions which when executed on a computer and/or on a sensing-capable or sensing-enabled entity or functionality (111, 20, 112, 21) and/or on a sensing edge server (440) and/or on a sensing application server (460), or in part on a sensing-capable or sensing-enabled entity or functionality (111, 20, 112, 21) and/or in part on a sensing edge server (440) and/or in part on a sensing application server (460), causes the computer and/or the sensing-capable or sensing-enabled entity or functionality (111, 20, 112, 21) and/or the sensing edge server (440) and/or the sensing application server (460) to perform a method according to one of claims 1 to 6.
